# EUROPEAN PATENT APPLICATION

(11) **EP 4 748 807 A1**
(43) Date of publication of application: **27.05.2026**
(21) Application number: 23948233.4
(22) Date of filing: 26.10.2023
(51) Int. Cl.: C03C 15/02, C03C 15/00

(54) **METHOD FOR PREPARING ANTI-GLARE GLASS, AND ANTI-GLARE GLASS**

(30) Priority: 04.08.2023 CN 202310976090
(71) Applicant: SHINWU OPTRONICS (SUZHOU) CO., LTD, Wujiang Suzhou, Jiangsu 215222 (CN)
(72) Inventor: FAN, Yule, Baoji, Shaanxi 721400 (CN); WANG, Dan, Suzhou, Jiangsu 215200 (CN)
(74) Representative: Fernández-Pacheco, Aurelio Fernández
(86) International application number: PCT/CN2023/126901
(87) International publication number: WO 2025/030667

(57) **Abstract**

Disclosed in the present invention are a method for preparing anti-glare glass, and anti-glare glass. The method for preparing anti-glare glass comprises: mask layer attachment, which involves attaching a mask layer to at least one face of a glass substrate, wherein the mask layer comprises a plurality of holes which are regularly arranged; chemical etching, which involves etching the face of the glass substrate to which the mask layer is attached; mask layer removal, which involves removing the mask layer after the chemical etching is completed, so as to obtain a glass substrate, on the surface of which independent concave particles are uniformly distributed; and chemical polishing, which involves chemically polishing the face of the glass substrate from which the mask layer is removed, wherein the chemical polishing is stopped when adjacent concave particles have been polished to the extent where the adjacent concave particles intersect and share the same edge. By means of a mask layer and the design of chemical etching and chemical polishing, the technical difficulty of it not being possible to achieve high anti-glare performance and a low flashpoint at the same time is solved.

## Description

### Technical Field

The present disclosure relates to the technical field of anti-glare glass, in particular to a method for preparing anti-glare glass, and anti-glare glass.

### Background Art

Anti-glare glass is a kind of functional glass widely used in consumer electronic products. The anti-glare property of anti-glare glass can reduce the reflection and scattering of ambient light on a display screen, thus making the display effect clearer. Therefore, anti-glare glass is widely applied in vehicle-mounted displays and display screens of laptop computers, tablet computers, smart phones, TV sets and other electronic devices.

With the continuous development and popularization of the electronic product market, the demand for anti-glare glass is also increasing. The conventional preparation technology for anti-glare glass usually involves chemical etching or physical abrasive blasting on the surface of a glass substrate, followed by chemical polishing. However, the conventional preparation technology for anti-glare glass has many shortcomings, such as high preparation cost, poor environmental protection, and difficulty in trade-off between anti-glare effect and sparkle value. Especially, when the glass has very high anti-glare performance, the sparkle value of the glass surface is very high, which may easily lead to visual fatigue of the user. All such shortcomings restrict the wide application of the conventional preparation technology for anti-glare glass.

How to solve the above-mentioned technical problem has become an urgent technical challenge in the industry.

### Summary of the Invention

In order to at least solve the above technical problems, an object of the present disclosure is to provide a method for preparing anti-glare glass, which solves the technical problem of trade-off between high anti-glare performance and low sparkle value through the design of a mask layer and chemical etching and chemical polishing.

In order to attain the above object, the method for preparing anti-glare glass provided by the present application comprises the following steps:
attaching a mask layer: attaching a mask layer to at least one side of a glass substrate, wherein the mask layer comprises a plurality of regularly arranged holes;
chemical etching: etching the side of the glass substrate to which the mask layer is attached;
removing the mask layer: removing the mask layer after the chemical etching is completed, to obtain a glass substrate with individual concave particles uniformly distributed on the surface;
chemical polishing: performing chemical polishing on the side of the glass substrate from which the mask layer has been removed; and
stopping the chemical polishing when adjacent concave particles are polished to a degree that they intersect each other and share the same edge with each other.

Furthermore, the method further comprises further polishing the glass substrate after the adjacent concave particles are polished by chemical polishing to a degree that they intersect each other and share the same edge with each other, and stopping the polishing when Ra of the polished glass substrate is reduced to 0.03 µm and/or Rz of the polished glass substrate is reduced to 0.1 µm.

Furthermore, the mask layer is an acid-resistant mask layer.

Furthermore, the plurality of regularly arranged holes in the mask layer comprises:
center distances of adjacent holes are the same; and
the holes are in diameter of 1 µm - 100 µm.

Furthermore, an equilateral triangle may be formed by connecting the centers of any three adjacent holes.

Furthermore, the center distance between any two adjacent holes is 1.5 µm to 100 µm.

Furthermore, the chemical etching comprises etching the glass substrate in the holes on the side attached with the mask layer, the etching depth is 0.1 µm to 50 µm.

Furthermore, the etching comprises etching the glass substrate with an etching solution, and the etching solution is a hydrofluoric acid solution or a mixed solution of hydrofluoric acid, nitric acid, sulfuric acid and hydrochloric acid.

Furthermore, in the case that the etching solution is a mixed solution of hydrofluoric acid, nitric acid, sulfuric acid and hydrochloric acid, the concentration of the hydrofluoric acid is 1 wt.% - 12 wt.%, the concentration of the sulfuric acid is 0 wt.% - 12 wt.%, the concentration of the hydrochloric acid is 0 wt.% - 12 wt.% and the concentration of the nitric acid is 0 wt.% - 12 wt.%.

Furthermore, the etching solution is within a temperature range of 16°C to 22°C.

Furthermore, the duration of the chemical etching is 5 to 1,800 seconds.

Furthermore, the chemical polishing comprises polishing the glass substrate with a polishing solution, and the polishing solution is a mixed solution of hydrofluoric acid and sulfuric acid.

Furthermore, the concentration of the hydrofluoric acid in the polishing solution is 3 wt.% - 12 wt.%, and the concentration of the sulfuric acid in the polishing solution is 3 wt.% - 12 wt.%.

Furthermore, the polishing solution is within a temperature range of 29°C to 35°C.

Furthermore, the method further comprises the following step before the chemical etching:
attaching a protective film layer: in the case that the mask layer is attached only to one side of the glass substrate, attaching an acid-resistant protective film to the opposite side of the glass substrate.

Furthermore, the method further comprises the following step after the chemical polishing is finished: removing the acid-resistant protective film.

In order to attain the above object, an embodiment of the present disclosure further provides anti-glare glass, which is prepared with the aforesaid method for preparing anti-glare glass.

The method for preparing anti-glare glass according to an embodiment of the present disclosure comprises the following steps: attaching a mask layer: attaching a mask layer to at least one side of a glass substrate, wherein the mask layer comprises a plurality of regularly arranged holes; chemical etching: etching the side of the glass substrate to which the mask layer is attached; removing the mask layer: removing the mask layer after the chemical etching is completed, to obtain a glass substrate with individual concave particles uniformly distributed on the surface; chemical polishing: performing chemical polishing on the side of the glass substrate from which the mask layer has been removed; and stopping the chemical polishing when adjacent concave particles are polished to a degree that they intersect each other and share the same edge with each other. With the method for preparing anti-glare glass according to an embodiment of the present disclosure, concave particles that are uniform in size, shape and depth and in uniform distribution are formed on the surface of a glass substrate by means of the design of a mask layer and chemical etching and chemical polishing, so that the sparkle value of anti-glare glass having the same anti-glare performance is greatly decreased, and a technical problem that high anti-glare performance conflicts with a low sparkle value is solved; for the preparation of glass substrates made of a different material or glasses of a different anti-glare specification, anti-glare glass of a preset specification can be obtained simply by adjusting the size, center distance of the holes in the mask layer and the etching depth of the concave particles during the etching; the problem of a complex formulation of the etching solution used in conventional chemical etching of anti-glare glass is solved; moreover, the surface of the anti-glare glass is more regular, excellent anti-glare performance is achieved while a lower sparkle value is obtained, and the market competitiveness of the end-product is improved.

### Brief Description of the Drawings

The accompanying drawings are provided for further understanding of the present application, and constitute a part of the specification. These drawings are used in conjunction with the embodiments of the present application to explain the present application, but are not intended to constitute any limitation on the present application. In the figures:
FIG. 1 is a schematic diagram of flowchart of the method for preparing anti-glare glass according to an embodiment of the present application;
FIG. 2 is a schematic diagram of flowchart of the method for preparing anti-glare glass according to another embodiment of the present application; and

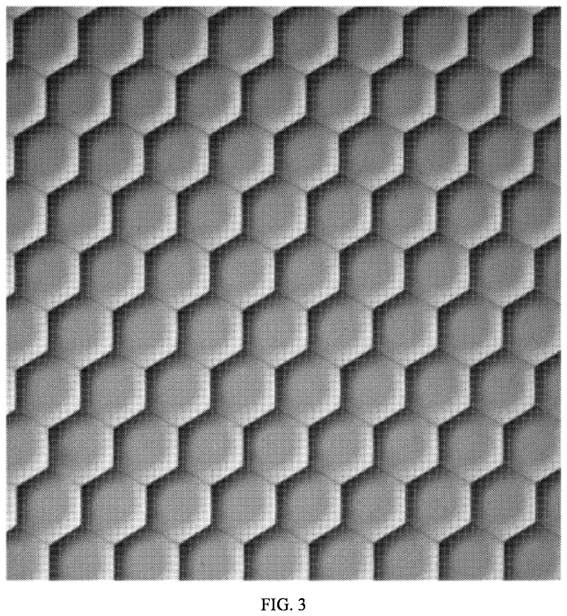

FIG. 3 is an SEM view of the anti-glare glass according to an embodiment of the present application.

### Detailed Description of Embodiments

Embodiments of the present application will be described in more detail below with reference to the accompanying drawings. While some embodiments of the present application are illustrated in the accompanying drawings, it should be understood that the present application can be implemented in various forms and should not be construed as being limited to the embodiments set forth herein; on the contrary, those embodiments are provided only for a more thorough and complete understanding of the present application. It should be understood that the drawings and embodiments of the present application are only for an illustrative purpose, but are not intended to limit the scope of protection of the present application.

It should be understood that the steps described in the method embodiments of the present application can be performed in a different order and/or in parallel. Besides, the method embodiments may include additional steps and/or omit some illustrated steps. The scope of the present application is not limited in this respect.

As used herein, the term "comprising" and its variants mean open-ended including, i.e., "including but not limited to". The term "based on" means "at least partially based on". The term "an embodiment" means "at least one embodiment"; the term "another embodiment" means "at least one other embodiment"; the term "some embodiments" means "at least some embodiments". The related definitions of other terms will be given in the following description.

It should be noted that the modifiers "a/an" and "a plurality of" mentioned in the present application are illustrative rather than limiting, and those skilled in the art should understand that they should be understood as "one or more" unless the context clearly indicates otherwise; "a plurality of" should be understood as two or more.

Embodiments of the present application will be described below in detail with reference to the accompanying drawings.

**In** an embodiment, the present disclosure provides a method for preparing anti-glare glass, which comprises the following steps:
attaching a mask layer: attaching a mask layer to at least one side of a glass substrate, wherein the mask layer comprises a plurality of regularly arranged holes;
chemical etching: etching the side of the glass substrate to which the mask layer is attached;
removing the mask layer: removing the mask layer after the chemical etching is completed, to obtain a glass substrate with individual concave particles uniformly distributed on the surface;
chemical polishing: performing chemical polishing on the side of the glass substrate from which the mask layer has been removed; and
stopping the chemical polishing when adjacent concave particles are polished to a degree that they intersect each other and share the same edge with each other.

### Example 1

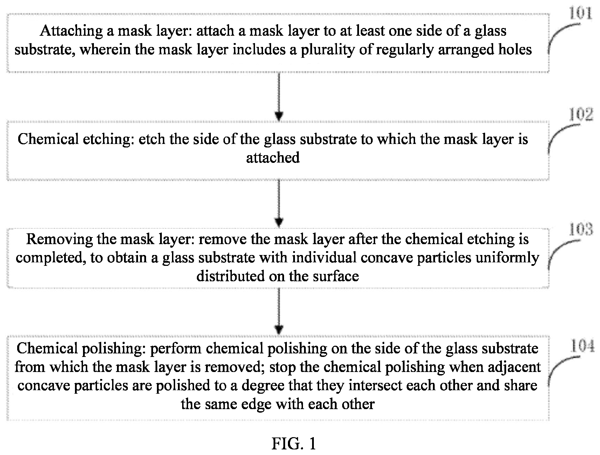

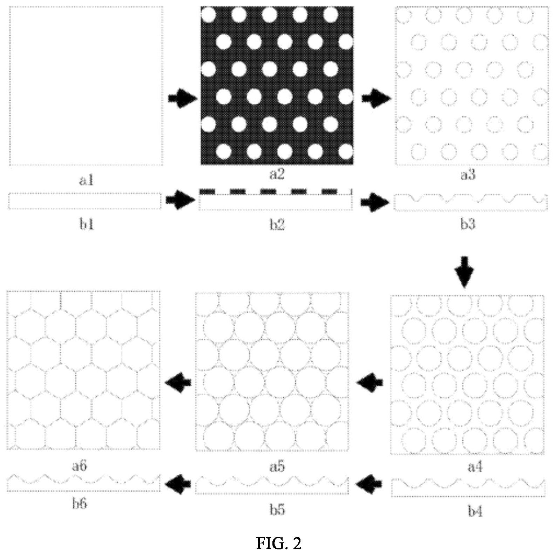

FIG. 1 is a schematic diagram of flowchart of the method for preparing anti-glare glass according to an embodiment of the present application, and FIG. 2 is a schematic diagram of flowchart of the method for preparing anti-glare glass according to another embodiment of the present application. The method for preparing anti-glare glass according to an embodiment of the present disclosure will be described below in detail with reference to FIGS. 1-2.

The method for preparing anti-glare glass according to an embodiment of the present disclosure is used for performing surface treatment on glass, such as vehicle-mounted anti-glare glass, anti-glare glass on the surfaces of mobile terminals, etc., to improve anti-glare function of the glass.

In FIG. 2, a1 - a6 are schematic structural diagrams of the surfaces of anti-glare glass prepared with the method for preparing anti-glare glass according to the embodiment of the present disclosure, and b1 - b6 are schematic structural diagrams of the lateral sides of the anti-glare glass.

Firstly, in step 101, a mask layer is attached: a mask layer is attached to at least one side of a glass substrate, wherein the mask layer comprises a plurality of regularly arranged holes.

In an exemplary embodiment, firstly, a mask layer is attached to at least one side of a glass substrate, for example, a mask layer is attached to one side of a glass substrate, as shown by a2 and b2 in FIG. 2.

In an exemplary embodiment, a mask layer is attached to at least one surface of a glass substrate, for example, a mask layer is attached to the front side of a glass substrate, or a mask layer is attached to the back side of the glass substrate. Of course, mask layers may be attached to both the front side and the back side of the glass substrate if required.

In an exemplary embodiment, usually there are technical requirements only for the front side and/or back side of the anti-glare glass, while the lateral sides of the glass substrate don't affect the optical parameters and performance. Therefore, the surfaces of the glass substrate mentioned in the method for preparing anti-glare glass in the embodiment of the present application refer to the front side and back side of the glass substrate.

In an exemplary embodiment, the mask layer comprises a plurality of regularly arranged holes.

In an exemplary embodiment, the holes are through-holes.

In an exemplary embodiment, the mask layer comprises a plurality of regularly arranged holes, which means that the arrangement of the holes in the mask layer follows certain rules, and is not used to confine each hole to the same size; of course, if necessary, the holes in the mask layer may be in the same size, or the spacing arrangement of the holes in the same size follows certain rules.

In an exemplary embodiment, the plurality of regularly arranged holes in the mask layer comprises: center distances between adjacent holes are the same, i.e., the center distances between holes adjacent to each other are equal.

In an exemplary embodiment, there is certain clearance between adjacent holes in the mask layer, i.e., adjacent holes are not connected to each other; or it may be understood that there is no intersection area or tangent point between adjacent holes.

In an exemplary embodiment, an equilateral triangle may be formed if the centers of any three adjacent holes are connected, that is, the holes are distributed in an equilateral triangle pattern.

In an exemplary embodiment, of course, if required, the connecting lines between the centers of four adjacent holes may form a square shape, a rectangular shape, or a rhombic shape, etc.

In an exemplary embodiment, the center distance between any two adjacent holes is 1.5 µm to 100 µm.

In an exemplary embodiment, the holes are circular holes. Of course, if necessary, the shape of the holes may be adjusted according to the actual requirement. In the present application, the holes are designed into circular holes for the purpose of more quickly and more efficiently forming holes in the mask layer. For example, in the case that the mask layer is acid-resistant photosensitive ink or acid-resistant photoresist, development is carried out after exposure with an exposure machine; if the hole diameter is very small, the requirement for light spot accuracy is extremely high; circular holes can be formed more easily in such a case.

In an exemplary embodiment, the holes are in diameter within a range of 1 µm to 100 µm.

In an exemplary embodiment, the holes are in diameter within a range of 1 µm to 25 µm.

In an exemplary embodiment, the holes may be in an elliptical, rectangular, or hexagonal shape, and particularly may be in a circular, square, or regular hexagonal shape, etc.

In an exemplary embodiment, the mask layer is an acid-resistant mask layer.

In an exemplary embodiment, the mask layer may be a metal film layer arranged with a plurality of regularly arranged holes, or acid-resistant photosensitive ink or acid-resistant photoresist may be arranged on the surface of a glass substrate, and then the ink or photoresist may be exposed and developed to form regularly arranged holes; of course, the specific arrangement of the mask layer may be selected according to the actual requirement, and is not limited to the above examples.

In an exemplary embodiment, in the case that the mask layer is formed from ink or photoresist, the thickness of the mask layer is 1 µm to 50 µm.

In an exemplary embodiment, in the case that the mask layer is formed from ink or photoresist, the arrangement way of the mask layer includes roll coating, screen printing, or spin coating with a spin coater, etc.

In an exemplary embodiment, in the case that the mask layer is formed from ink or photoresist, the holes regularly arranged in the mask layer may be formed by way of exposure and development.

Step 102: Chemical etching: etching the side of the glass substrate to which the mask layer is attached.

In an exemplary embodiment, the glass substrate is chemically etched, and the chemical etching is to etch the side of the glass substrate to which the mask layer is attached.

In an exemplary embodiment, for the side of the glass substrate to which the mask layer is attached, only the areas in holes in the mask layer are exposed, the chemical etching is to etch the glass substrate in the holes, i.e., chemically etch the parts of the glass substrate in the holes, as shown by a2 and b2 in FIG. 2.

In an exemplary embodiment, concave particles in certain depth are formed by etching with an etching solution being introduced into the areas in holes in the mask layer on the glass substrate.

In an exemplary embodiment, the etching depth is 0.1 µm to 50 µm; of course, the etching depth doesn't exceed the thickness of the glass substrate, and typically the etching depth doesn't exceed half the thickness of the glass substrate.

In an exemplary embodiment, the etching duration is 5 to 1,800 seconds.

In an exemplary embodiment, the etching depth can be adjusted by adjusting the concentration of the etching solution and/or the etching duration.

In an exemplary embodiment, the temperature of the etching solution is 16°C to 22°C.

Step 103: Removing the mask layer: removing the mask layer after the chemical etching is completed, to obtain a glass substrate with individual concave particles uniformly distributed on the surface.

In an exemplary embodiment, the chemical etching is stopped when the glass substrate in the holes is etched to specified etching depth, and the mask layer on the etched side is removed, as shown by a3 and b3 in FIG. 2.

In an exemplary embodiment, removing the mask layer comprises tearing, washing, or removing with a chemical agent, etc.

In an exemplary embodiment, at this point, for the surface of the glass substrate from which the mask layer is removed, the areas in the holes has pits, which are the concave particles, and the positions, shapes and sizes of the concave particles are consistent with those of the holes in the mask layer; the areas without holes are unetched areas; at this point, a plurality of individual concave particles are uniformly distributed on the surface of the glass substrate.

In an exemplary embodiment, a plurality of individual concave particles are uniformly distributed on the surface of the glass substrate; furthermore, in the case that the concave particles are arranged according to certain rules, a regular cycle may be regarded as an integral unit, and a plurality of integral units are uniformly distributed on the glass substrate.

In an exemplary embodiment, at this point, the unetched areas are raised platform areas relative to the concave particles.

Step 104: Chemical polishing: performing chemical polishing on the side of the glass substrate from which the mask layer has been removed; and stopping the chemical polishing when adjacent concave particles are polished to a degree that they intersect each other and share the same edge with each other.

In an exemplary embodiment, after the mask layer is removed, the side of the glass substrate from which the mask layer is removed is chemically polished, which is to say, the entire side is chemically polished. Owing to the isotropic corrosion of hydrofluoric acid on glass, the diameters of the concave particles are gradually increased, while the depth of the concave particles remains unchanged.

In an exemplary embodiment, since only the glass substrate in the holes is etched during the chemical etching, continuous concave and convex undulations in different etching depths occur on the surface of the glass substrate during the chemical polishing, and the concave and convex undulations are the concave particles.

In an exemplary embodiment, during the chemical polishing, the concave particles based on the chemical etching are gradually expanded under the polishing effect. Here, circular concave particles are used as an example for explanation. The radius of each concave particle area will be gradually expanded, till adjacent circular particles are tangent to each other, and then gradually intersect each other, as shown by a4-a6 and b4-b6 in FIG. 2.

In an exemplary embodiment, since the chemical polishing is to polish the entire surface of the glass substrate, the original areas without concave particles are also in the scope of polishing during the chemical polishing. In the process that the entire surface of the glass substrate is polished and etched, when adjacent circular particles intersect each other and there is no planar protrusion, i.e., when adjacent circular particles are expanded to a degree that they share the same edge with each other, the etching can be stopped, and anti-glare glass with particles uniformly distributed on the surface can be obtained, as shown by a4-a6 and b4-b6 in FIG. 2; of course, to achieve an anti-glare effect on the entire surface, the etching should be stopped only when all the adjacent concave particles on the surface share the same edge with each other.

In an exemplary embodiment, at this point, the circular particles are expanded to a degree that adjacent circular particles share the same edge with each other, and each original circular particle is in a regular hexagonal shape now, i.e., the surface of the glass substrate becomes an anti-glare glass surface with a honeycombed appearance.

In an exemplary embodiment, after the chemical polishing is carried out to a degree that every two adjacent particles on the glass surface intersect each other and share the same edge with each other, chemical polishing may be carried out further as required. At this point, the diameters of the particles on the surface of the glass will not be increased further, but the depth of the particles will be gradually decreased, which is to say, the surface roughness Ra and Rz of the glass surface will be gradually decreased, thereby the gloss of the glass will be increased while the haze of the glass will be decreased.

In an exemplary embodiment, after the chemical polishing is carried out to a degree that every two adjacent particles on the glass surface intersect each other and share the same edge with each other, chemical polishing can be carried out further as required, and may be stopped when Ra of the polished glass substrate is decreased to 0.03 µm and/or Rz of the polished glass substrate is decreased to 0.1 µm.

In an exemplary embodiment, Ra represents an arithmetic average deviation of the contour, i.e., an arithmetic mean of absolute offset distances of the contour within the sampling length.

In an exemplary embodiment, Rz represents ten-point height of microscopic irregularities, i.e., a sum of the average height values of five highest peaks of the contour and the average depth values of five deepest valleys of the contour within the sampling length.

In an exemplary embodiment, the purpose of the chemical polishing is to gradually expand the individual concave particles formed by etching till adjacent concave particles intersect each other and share the same edge with each other and there is no planar protrusion, and microstructures consistent in size, depth and shape are formed on the surface of the glass substrate.

In an exemplary embodiment, the chemical polishing eliminates the planar protrusions, which can be understood as follows: concave particles appear in the chemical etching, but the areas between the concave particles are still planar areas with flat surfaces, the planar areas are planar protrusions relative to the concave particles, as shown by a3 and b3 in FIG. 2; the chemical polishing lowers the planar areas gradually while increases the diameters of the concave particles, till the planar areas are eliminated, as shown by a4-a6 and b4-b6 in FIG. 2; after the planar areas are eliminated, the chemical polishing is carried out further, at this point, the diameters of the concave particles remain unchanged, but the depth of the concave particles is gradually decreased, thereby the surface roughness Ra and Rz can be decreased, the gloss of the glass can be improved, and the haze of the glass can be decreased.

In an exemplary embodiment, during the chemical etching, the glass substrate is etched with an etching solution.

In an exemplary embodiment, during the chemical polishing, the glass substrate is polished with a polishing solution.

In an exemplary embodiment, the etching solution is a hydrofluoric acid solution or a mixed solution of hydrofluoric acid, sulfuric acid, hydrochloric acid and nitric acid.

In an exemplary embodiment, in the case that the etching solution is a mixed solution of hydrofluoric acid, nitric acid, sulfuric acid and hydrochloric acid, the concentration of the hydrofluoric acid is 1 wt.% - 12 wt.%, the concentration of the sulfuric acid is 0 wt.% - 12 wt.%, the concentration of the hydrochloric acid is 0 wt.% - 12 wt.%, and the concentration of the nitric acid is 0 wt.% - 12 wt.%, which is to say, the etching solution may be a mixed solution of hydrofluoric acid with any one of nitric acid, sulfuric acid and hydrochloric acid, or any combination of the hydrofluoric acid with nitric acid, sulfuric acid and hydrochloric acid; alternatively, the etching solution may be hydrofluoric acid solely, and the concentration of the hydrofluoric acid is 1 wt.% - 12 wt.%.

In an exemplary embodiment, during the chemical etching, the temperature range of the etching solution is 16°C to 22°C.

In an exemplary embodiment, the polishing solution is a mixed solution of hydrofluoric acid and sulfuric acid.

In an exemplary embodiment, the concentration of hydrofluoric acid in the polishing solution is 3 wt.% - 12 wt.%, and the concentration of sulfuric acid in the polishing solution is 3 wt.% - 12 wt.%.

In an exemplary embodiment, during the polishing, the temperature range of the polishing solution is 29°C to 35°C.

In an exemplary embodiment, the method for preparing anti-glare glass according to the embodiment of the present application further comprises cleaning the surface of the glass substrate before attaching a mask layer to the glass substrate, for the purpose of removing foreign matters on the surface of the glass substrate to avoid the occurrence of loose attachment of the mask layer or uneven etching depth, as shown by a1 and b1 in FIG. 2.

In an exemplary embodiment, the method further comprises attaching a protective film layer before the chemical etching.

In an exemplary embodiment, in the case that only one side of the glass substrate is chemically etched or one side is etched in sequence, i.e., in the case that a mask layer is attached to only one side of the glass substrate, an acid-resistant protective film is attached to the opposite side of the glass substrate.

In an exemplary embodiment, for example, in the case that only the front side of the glass substrate is etched, i.e., in the case that only the front side of the glass substrate is specified to have an anti-glare effect, a protective film layer is attached to the back side of the glass substrate to prevent the back side from being eroded by the etching solution.

In an exemplary embodiment, the protective film layer comprises an acid-resistant protective film.

In an exemplary embodiment, in the method for preparing anti-glare glass according to the embodiment of the present application, in the case that only one side of the glass substrate is etched, there is no particular requirement on whether to attach the mask layer or the protective film layer first and the mask layer and the protective film layer may be attached simultaneously.

In an exemplary embodiment, after the chemical etching and the chemical polishing are finished, optionally, the method further comprises cleaning the glass substrate to prevent the glass substrate from being eroded by any residual etching solution or polishing solution and prevent the regular anti-glare texture on the surface of the glass substrate from being damaged.

In an exemplary embodiment, in the case that a protective film layer is attached, the method further comprises removing the protective film layer after the chemical polishing is finished.

In an exemplary embodiment, in the case that both sides of the glass substrate are to be etched, the two sides may be treated sequentially or synchronously through the anti-glare process.

In an exemplary embodiment, the anti-glare glass obtained with the method for preparing anti-glare glass according to the embodiment of the present application has regular micro-particle structures on the surface, which can greatly decrease the sparkle value of the anti-glare glass, so that an excellent feature of high anti-glare performance with a low sparkle value is obtained.

### Example 2

In this example 2 of the present disclosure, anti-glare glass is provided, and the anti-glare glass is prepared with the method for preparing anti-glare glass according to the above example.

In an exemplary embodiment, in order to further reflect the excellent performance of the anti-glare glass according to the example of the present application, Table 1 shows performance comparison between the anti-glare glass according to the embodiment of the present application and the anti-glare glass formed through conventional chemical etching in the prior art on the surface of a glass substrate:

**Table 1**

| | Mirror Gloss at 60° Angle | Distinctness of Image (DOI) | Haze | Roughness | Sparkle Value (220 PPI) | Particle Shape | Particle Diameter | Average Particle Depth |
|---|---|---|---|---|---|---|---|---|
| Comparative Example 1 | 63% | 98.90% | 18.60 % | 0.028 µm | 0.50 | Irregular | 1.896 µm | 0.16 µm |
| Comparative Example 2 | 25.40 % | 39.50% | 25.60 % | 0.227 µm | 4.09 | Irregular | 19.866 µm | 1.2 µm |
| 1^{st} Group | 22.50 % | 2.20% | 33% | 0.316 µm | 1.85 | Regular hexagon | 25.06 µm | 1.57 µm |
| 2^{nd} Group | 23.20 % | 3.60% | 32.50 % | 0.311 µm | 1.87 | Square | 25.04 µm | 1.52 µm |
| 3^{rd} Group | 23% | 40.50% | 32.70 % | 0.219 µm | 1.1 | Regular hexagon | 20.03 µm | 1.211 µm |
| 4^{th} Group | 65.2% | 22.3% | 5.4% | 0.143 µm | 2.213 | Regular hexagon | 25.06 µm | 0.54 µm |
| 5^{th} Group | 64.3% | 99.1% | 19.1% | 0.025 µm | 0.114 | Regular hexagon | 1.8 µm | 0.158 µm |

In an exemplary embodiment, as shown in Table 1, the Comparative Examples 1 and 2 provide anti-glare glass formed by conventional chemical etching on the surface of a glass substrate respectively. The process of forming anti-glare glass by conventional chemical etching typically includes: directly spraying a chemical etching solution on the glass surface first, waiting for a certain period of time and then cleaning the glass surface, and then carrying out chemical polishing. The chemical polishing also involves directly and evenly spraying a polishing solution on the glass surface after the chemical etching, and waiting for a certain period of time. A specific effect of anti-glare glass treatment is achieved by means of different compositions of the chemical etching solution and the polishing solution and different reaction durations. For example, the anti-glare glass in the Comparative Example 1 in Table 1 employs the following process: directly and evenly spraying a chemical etching solution on the glass surface first, waiting for 3 minutes, and then cleaning the glass surface; components of the chemical etching solution comprise ammonium fluoride, oxalic acid, ammonium sulfate, sodium sulfate, glycerol and water, wherein the concentration of the ammonium fluoride is 16.8 wt.%, the concentration of the oxalic acid is 8 wt.%, the concentration of the ammonium sulfate is 9 wt.%, the concentration of the sodium sulfate is 15.7 wt.%, the concentration of the glycerol is 39.3 wt.%, and water accounts for 11.2 wt.%; then, directly and evenly spraying a chemical polishing solution on the chemically etched glass surface. The anti-glare glass prepared in the Comparative Example 1 has a low sparkle value, but has a poor anti-glare performance.

The anti-glare glass in the Comparative Example 2 in Table 1 employs the following process: directly and evenly spraying a chemical etching solution on the glass surface first, waiting for 20 minutes, and then cleaning the glass surface; components of the chemical etching solution comprise ammonium fluoride, oxalic acid, ammonium sulfate, sodium sulfate, glycerol and water, wherein the concentration of the ammonium fluoride is 9.8 wt.%, the concentration of the oxalic acid is 4.5 wt.%, the concentration of the ammonium sulfate is 6.5 wt.%, the concentration of the sodium sulfate is 11 wt.%, the concentration of the glycerol is 25.2 wt.%, and water accounts for 43 wt.%; then, directly and evenly spraying a chemical polishing solution on the chemically etched glass surface. Although the anti-glare glass prepared in the Comparative Example 2 has an improved anti-glare effect, it has a high sparkle value as well.

As can be seen from Table 1, in the Comparative Example 1, when the sparkle value is low, a weak anti-glare performance also exists; in the Comparative Example 2, when the anti-glare performance is improved, the problem of high sparkle value will occur again. The technical requirements for high anti-glare performance with a low sparkle value cannot be met by the comparative examples like that in the anti-glare glass according to the embodiment of the present application.

In an exemplary embodiment, as shown in Table 1, data in 1^{st} group is obtained with the method for preparing anti-glare glass according to the embodiment of the present application, wherein the diameter of the holes in the mask layer is 3 µm, the center distance between the holes is 25 µm, and the holes are arranged in the form of regular triangles; after chemical etching, the center distance between adjacent concave particles is 25 µm, the average depth of the concave particles is 1.57 µm, and the maximum depth of the concave particles is 3 µm; after chemical polishing, the diameter of the concave particles is 25.06 µm, the average depth is 1.57 µm, the maximum depth is 3 µm, which are obtained when the roughness Ra reaches 0.316 µm.

In an exemplary embodiment, as shown in Table 1, data in the 2^{nd} group is obtained with the method for preparing anti-glare glass according to the embodiment of the present application, wherein the diameter of the holes in the mask layer is 3 µm, the center distance between the holes is 25 µm, and the holes are arranged in the form of squares; after chemical etching, the center distance between adjacent concave particles is 25 µm, the average depth of the concave particles is 1.52 µm, and the maximum depth of the concave particles is 3 µm; after chemical polishing, the diameter of the concave particles is 25.04 µm, the average depth is 1.52 µm, the maximum depth is 3 µm, which are obtained when the roughness Ra reaches 0.311 µm.

In an exemplary embodiment, as shown in Table 1, data in 3^{rd} group is obtained with the method for preparing anti-glare glass according to the embodiment of the present application, wherein the diameter of the holes in the mask layer is 3 µm, the center distance between the holes is 20 µm, and the holes are arranged in the form of regular triangles; after chemical etching, the center distance between adjacent concave particles is 20 µm, the average depth of the concave particles is 1.211 µm, and the maximum depth of the concave particles is 2.32 µm; after chemical polishing, the diameter of the concave particles is 20.03 µm, the average depth is 1.211 µm, the maximum depth is 2.32 µm, which are obtained when the roughness Ra reaches 0.311 µm.

In an exemplary embodiment, as can be seen from Table 1, data in 1^{st} group to 3^{rd} group is compared with the data in Comparative Example 2 under the condition of similar mirror gloss at 60° angle, wherein the distinctness of image (DOI) in Comparative Example 2 is 39.50% and the distinctness of image (DOI) in the 3^{rd} group is 40.50%, the sparkle value in the Comparative Example 2 is 4.09, but the sparkle value in the 3^{rd} group is only 1.1; although the distinctness of image (DOI) is 2.20% in the 1^{st} group and 3.60% in 2^{nd} group, respectively, the sparkle value is still only 1.85 and 1.87 respectively. From the above data comparison, it can be seen that the sparkle value of the anti-glare glass treated through the process according to the embodiment of the present application is much lower than that of the anti-glare glass treated through the conventional chemical process under the same detection conditions, no matter whether it has a similar anti-glare effect or a more outstanding anti-glare effect.

In an exemplary embodiment, as shown in Table 1, data in the 4^{th} group is obtained with the method for preparing anti-glare glass according to the embodiment of the present application, wherein the diameter of the holes in the mask layer is 3 µm, the center distance between the holes is 25 µm, and the holes are arranged in the form of regular triangles; after chemical etching, the center distance between adjacent concave particles is 25 µm, the average depth of the concave particles is 1.57 µm, and the maximum depth of the concave particles is 3 µm; after chemical polishing, the diameter of the concave particles is 25.06 µm, the average depth is 0.54 µm, the maximum depth is 0.964 µm, which are obtained when the roughness Ra reaches 0.143 µm.

In an exemplary embodiment, as can be seen from Table 1, the distinctness of image (DOI) in the 4^{th} group is 22.3%, which is much lower than the distinctness of image (DOI) of 39.50% in the Comparative Example 2, but the sparkle value in the 4^{th} group is as low as 2.213, which is much lower than the sparkle value of 4.09 in the Comparative Example 2.

In an exemplary embodiment, as shown in Table 1, data in 5^{th} group is obtained with the method for preparing anti-glare glass according to the embodiment of the present application, wherein the diameter of the holes in the mask layer is 1 µm, the center distance between the holes is 1.8 µm, and the holes are arranged in the form of regular triangles; after chemical etching, the center distance between adjacent concave particles is 1.5 µm, the average depth of the concave particles is 0.158 µm, and the maximum depth of the concave particles is 0.337 µm; after chemical polishing, the diameter of the particles is 1.8 µm, the average depth of the particles is 0.158 µm when the roughness Ra reaches 0.143 µm.

In an exemplary embodiment, as can be seen from Table 1, in the comparison between the 5^{th} group and the Comparative Example 1 under the condition of similar mirror gloss at 60° angle: when the distinctness of image (DOI) values in both cases are similar, the sparkle value in the Comparative Example 1 is 0.5, while the sparkle value in the 5^{th} group is only 0.114; it can be seen that the sparkle value of the anti-glare glass treated through the process according to the embodiment of the present application is much lower than that of the existing anti-glare glass treated through the conventional chemical process under the condition of equivalent mirror gloss at 60° angle and equivalent anti-glare performance.

While some embodiments of the present disclosure are disclosed above, those embodiments are provided only to facilitate understanding the present disclosure rather than limit the present disclosure in any way. Those skilled in the art to which the present disclosure belongs can make various modifications and variations to the form and details of implementation without departing from the spirit and scope disclosed by the present disclosure, but the scope of patent protection of the present disclosure shall still be deemed as the scope defined by the attached claims.

## Claims

1. A method for preparing anti-glare glass, comprising:
attaching a mask layer: attaching a mask layer to at least one side of a glass substrate, wherein the mask layer comprises a plurality of regularly arranged holes;
chemical etching: etching the side of the glass substrate to which the mask layer is attached;
removing the mask layer: removing the mask layer after the chemical etching is completed, to obtain a glass substrate with individual concave particles uniformly distributed on the surface;
chemical polishing: performing chemical polishing on the side of the glass substrate from which the mask layer has been removed; and
stopping the chemical polishing when adjacent concave particles are polished to a degree that they intersect each other and share the same edge with each other.

2. The method for preparing anti-glare glass according to claim 1, wherein the method further comprises further polishing the glass substrate after the adjacent concave particles are polished by chemical polishing to a degree that they intersect each other and share the same edge with each other, and stopping the polishing when Ra of the polished glass substrate is reduced to 0.03 µm and/or Rz of the polished glass substrate is reduced to 0.1 µm.

3. The method for preparing anti-glare glass according to claim 1, wherein the mask layer is an acid-resistant mask layer.

4. The method for preparing anti-glare glass according to claim 1, wherein the plurality of regularly arranged holes in the mask layer comprises:
center distances of adjacent holes are the same; and
the holes are in diameter of 1 µm to 100 µm.

5. The method for preparing anti-glare glass according to claim 4, wherein an equilateral triangle is formed if centers of any three adjacent holes are connected.

6. The method for preparing anti-glare glass according to claim 1, wherein the center distance between any two adjacent holes is 1.5 µm to 100 µm.

7. The method for preparing anti-glare glass according to claim 1, wherein the chemical etching comprises etching the glass substrate in the holes on the side attached with the mask layer to etching depth of 0.1 µm to 50 µm.

8. The method for preparing anti-glare glass according to claim 1, wherein the etching comprises etching the glass substrate with an etching solution, and the etching solution is a hydrofluoric acid solution, or a mixed solution of hydrofluoric acid, nitric acid, sulfuric acid and hydrochloric acid.

9. The method for preparing anti-glare glass according to claim 8, wherein in the case that the etching solution is a mixed solution of hydrofluoric acid, nitric acid, sulfuric acid and hydrochloric acid, the concentration of the hydrofluoric acid is 1 wt.% - 12 wt.%, the concentration of the sulfuric acid is 0 wt.% - 12 wt.%, the concentration of the hydrochloric acid is 0 wt.% - 12 wt.% and the concentration of the nitric acid is 0 wt.% - 12 wt.%.

10. The method for preparing anti-glare glass according to claim 8, wherein the etching solution is within a temperature range of 16°C to 22°C.

11. The method for preparing anti-glare glass according to claim 1, wherein the duration of the chemical etching is 5 to 1,800 seconds.

12. The method for preparing anti-glare glass according to claim 1, wherein the chemical polishing comprises polishing the glass substrate with a polishing solution, and the polishing solution is a mixed solution of hydrofluoric acid and sulfuric acid.

13. The method for preparing anti-glare glass according to claim 12, wherein the concentration of the hydrofluoric acid in the polishing solution is 3 wt.% - 12 wt.%, and the concentration of the sulfuric acid in the polishing solution is 3 wt.% - 12 wt.%.

14. The method for preparing anti-glare glass according to claim 13, wherein the polishing solution is within a temperature range of 29°C to 35°C.

15. The method for preparing anti-glare glass according to claim 1, wherein the method further comprises the following step before the chemical etching:
attaching a protective film layer: in the case that the mask layer is attached to only one side of the glass substrate, attaching an acid-resistant protective film to the other side of the glass substrate.

16. The method for preparing anti-glare glass according to claim 15, wherein the method further comprises the following step after the chemical polishing is finished:
removing the acid-resistant protective film.

17. Anti-glare glass prepared with the method for preparing anti-glare glass according to any one of the claims 1-16.
